# EUROPEAN PATENT SPECIFICATION

(11) **EP 3 861 900 B1**
(45) Date of publication and mention of the grant of the patent: **10.08.2022**
(21) Application number: 21155273.2
(22) Date of filing: 04.02.2021
(51) Int. Cl.: A47J 36/02, A47J 27/00, A47J 27/022, B32B 15/01

(54) **CONTAINER FOR COOKING FOOD AND PROCESS FOR MAKING THE SAME**
BEHÄLTER ZUM KOCHEN VON LEBENSMITTELN UND VERFAHREN ZU SEINER HERSTELLUNG
RÉCIPIENT POUR LA CUISSON DES ALIMENTS ET PROCÉDÉ DE FABRICATION DU RÉCIPIENT

(30) Priority: 04.02.2020 IT 202000002167
(43) Date of publication of application: 11.08.2021
(73) Proprietor: TVS S.p.A., 61033 Fermignano (PS) (IT)
(72) Inventor: Giuseppe Alberto, BERTOZZINI, 61033 FERMIGNANO (IT)
(74) Representative: Feltrinelli, Secondo Andrea

(56) References cited:
- EP-A1- 0 960 667
- DE-U1-202010 003 134

## Description

### TECHNICAL FIELD OF THE INVENTION

The present invention regards a container for cooking food or food, and the process for attaining the same. More specifically, the present regards a container that is particularly suitable for cooking food on plates functioning by means of electromagnetic induction, but also other conventional burners.

### STATE OF THE PRIOR ART

In the prior art, various types of containers for cooking food are known which are particularly suitable for use on electromagnetic induction plates, such as pans, pots, saucepans and the like. Some container types provide for a bottom constituted by ferromagnetic material and by a body, of bowl shape, made of non-ferromagnetic material and fixed to said bottom, as described for example in the document EP0411235A2.

Document EP 0 960 667 A1 discloses a method for the realisation of a container for cooking food, comprising pressing an assembly of a first element, made of a first metal material, and a second element, made of a second metal material, with the impact bonding technique so as to firmly connect said second element with said first element.

In the document EP0928587A1, a method is described for obtaining a cooking recipient with a base zone made of aluminum to which a steel cover is fixed with a process of connection via impact bonding, by means of an intermediate aluminum plate.

The method comprises the steps of: (a) arranging the intermediate aluminum plate between the base of the steel recipient and the ferromagnetic steel cover; (b) heating the base of the recipient, the aluminum plate and the steel cover to a temperature such that the aluminum becomes soft; (c) arranging the recipient with the aluminum plate and the steel cover in a press and, while the temperature of the aluminum plate is such that the aluminum is soft, (d) beating the steel cover against the base of the recipient, deforming the aluminum plate and obtaining a bond between the three parts, which are joined via seizure.

The joining of such components allows obtaining good technical results during the use of the container, in particular with electromagnetic induction plates, since the bottom made of ferromagnetic material is heated by means of the parasitic currents generated by the plates, thus transferring the heat to the non-ferromagnetic material body, in particular to the aluminum body, which provides for cooking food.

The process for attaining this container type generally provides for two types of procedures: the first mainly consists of a braze welding of the ferromagnetic material bottom to the non-ferromagnetic material bowl-shaped body, with interposition of a further disc, by using a brazing alloy; the other procedure consists of the impact bonding technique, i.e. the welding by impact of the ferromagnetic material bottom with the bowl-shaped body without the supply of a welding alloy.

The main problem of both above-described processes is the continuous thermal stress to which the ferromagnetic material is subjected during use for cooking food: the continuous heating and cooling thereof causes a passage from expansion to contraction that can also be subsequently manifested during the use of the container itself.

This involves a problem at the steel bottom, which can be detached from the recipient, especially on the curved edges, or the base of the recipient can become convex with the contained food which can be more greatly accumulated at the edges of the bottom with respect to the center of the container, and consequently negatively affect the correct cooking of food.

### OBJECTS OF THE INVENTION

The technical task of the present invention is that of improving the state of the art in the field of containers for cooking food.

In the context of such task, one object of the present invention is to implement a container for cooking food that is equipped with greater deformation resistance of the bottom. Another object of the present invention is to provide a container for cooking food having greater thermal efficiency with respect to the state of the art, particularly suitable for use with electromagnetic induction plates.

Still another object of the present invention is to provide a container for cooking food having greater efficiency with regard to heating speed.

Further object of the present invention is to implement a container for cooking food simply and inexpensively, in particular by using apparatuses and equipment of known type.

Such task and such objects are attained by a container for cooking food according to the enclosed claim 1.

In addition, such task and such objects are attained by a process for making a container for cooking food according to the enclosed claim 10.

The dependent claims refer to preferred and advantageous embodiments of the invention.

### BRIEF DESCRIPTION OF THE DRAWINGS

Other characteristics and advantages of the invention will be more evident from the description of an embodiment of a unit, illustrated as an example in the set of drawings, in which:
figure 1 is a sectional view of the container according to the present invention;
figure 2 shows the assembly step regarding the process of making the container for cooking food according to the present invention;

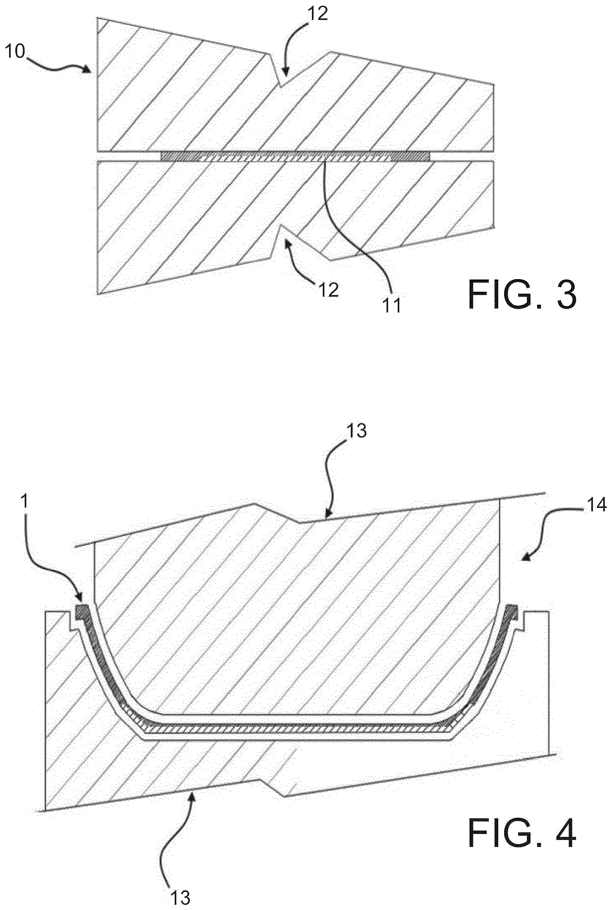

figure 3 shows the step of pressing or inclusion regarding the process for attaining the container for cooking food according to the present invention; and
figure 4 shows the step of molding or forming regarding the process for attaining the container for cooking food according to the present invention.

In the drawings, equivalent parts or components are marked with the same reference numbers.

### EMBODIMENTS OF THE INVENTION

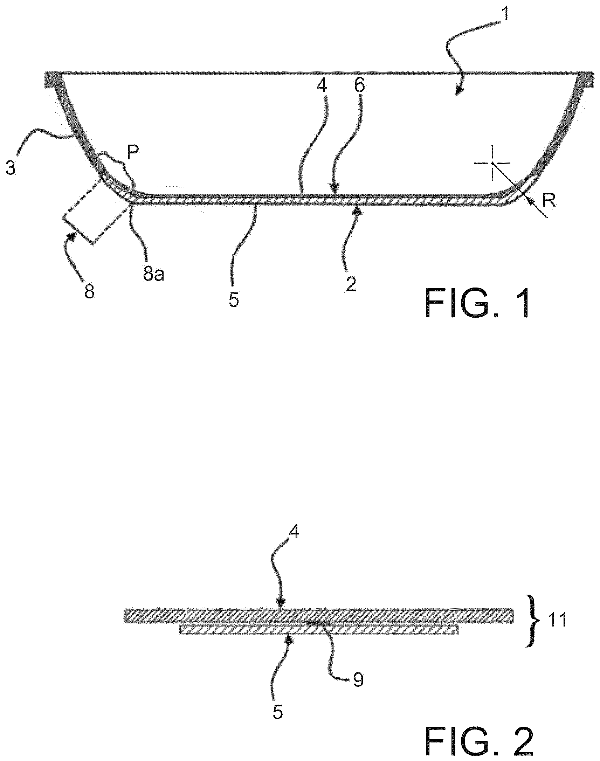

With reference to figure 1, reference number 1 overall indicates a container for cooking food according to the present invention. The container 1 defines a bottom 2 and a side wall 3. In order to be able to make different types of containers, there is no restriction on dimensions or proportions of the bottom 2 and of the side wall 3, thus enabling the production, based on the need, of pots, pans, saucepans and the like. The container 1 can be provided with any further accessory element, such as a permanent grip (not illustrated in the figures), fixable with means and techniques that are known in the field, or even a removable grip or handle. The container 1 comprises a first element 4 of substantially concave form, made of a first metal material, and a second element 5, made of a second metal material, fixed below an area 6 of the first element 4, corresponding to the bottom 2 of the container. The second element 5 can for example have a discoid or rectangular form or any other shape suitable for cooking food.

The first metal material, with which the first element 4 is made, is of non-ferromagnetic type.

More particularly, the first metal material is constituted by aluminum, for example aluminum Al4006, aluminum Al3003 or aluminum Al8006.

In other embodiments of the present invention, it is possible that the first element 4 is constituted by an aluminum alloy or, more generally, by another metal material or metal alloy with high thermal conductivity, good workabilty and compatible with food contact.

It should be specified that the first element 4, until the process for making the container 1 is completed, has the shape of a substantially flat discoid or the like.

The second metal material, however, with which the second element 5 is made, is of ferromagnetic type. More particularly, the second metal material is constituted by ferritic stainless steel, e.g. stainless steel AISI430 or stainless steel AISI410.

In other embodiments of the present invention, it is possible that the second element 5 be constituted by a steel alloy, or more generally by a ferrous alloy adapted to be employed on heat sources such as induction plates and the like, but also on other heat sources, without any limitation.

As a non-limiting example, the first element 4, in its rough form, has a thickness and a diameter which can respectively vary from 1 mm to 7 mm and from 90 mm to 460 mm.

Still as a non-limiting example, the second element 5 has a thickness which can vary between 0.2 mm and 1 mm, and generally is about 0.5 mm. With regard to the diameter of the second element 5, this can vary based on the desired size of the bottom 2 of the container 1.

Both the first element 4 and the second element 5 have a shiny lamination finish, so that it is necessary to undertake one or more working processes before forming of the container 1, in order to be able to obtain greater roughness of the surface of the elements 4 and 5, e.g. a roughness Ra comprised between 2 µm and 4 µm.

Such working processes can comprise processes of sandblasting, brushing, satinizing and the like, and have the object of improving the effectiveness of the adhesion of the first element 4 to the second element 5 and vice versa.

As illustrated in figure 1, the second element 5 has an upper extension with respect to the area 6 of the first element 4. Indeed, the material of the second element 5 is also arranged along a section 8 of the side wall 3 of the first element 4. The side wall 3 is, more in detail, defined by a curved wall of annular shape with flared form, i.e. the container 1 has an upper opening larger than the bottom.

Nevertheless, in other embodiments of the present invention, it is possible to have a side wall 3 with different shape or size in a manner so to make pots, pans or saucepans of various dimensions without any limitation.

The material is extended along the initial part P of the side wall 3, for a section 8 which can be rectilinear or curved and has a radius R of curvature that is extended for a specific extension arc with respect to the lying plane of the bottom 2 and with respect to an end 8a belonging to said bottom 2.

According to the present invention, the section 8 can have values comprised between 10 and 30 mm, the extension arc can have values comprised between 30° and 80°; according to a specific version of the present invention the section 8 has an extension of about 20 mm and an extension arc of about 35°.

More particularly, by extension arc it is intended the smaller angle delimited between the section 8 and the lying plane of the bottom 2. If the section 8 is curved, by extension arc it is intended the angle between the tangent in an intermediate point of the section 8 and the lying plane of the bottom 2.

With regard to the expression "smaller angle", as will be understood, between the section 8 and the lying plane of the bottom 2, two angles are delimited, one smaller and one greater, the smaller angle being complementary with the greater one.

The end 8a of the section 8, being the only point in common between bottom 2 and side wall 3, is also one of the ends of the initial part P of the side wall 3. The section 8 can have a length corresponding, for example in the case of a pan, to about 1/4 of the total height of the container 1.

More generally, in the case of any one container 1, the section 8 is extended for a length of 10 mm.

Due to the above-indicated geometry of the section 8 arranged between bottom 3 and side wall 2, a perfect adherence over time of the second element 5 to the first element 4 is always ensured, also following numerous heating and cooling cycles due to the use of the container 1.

Hereinbelow, the process is illustrated for making the above-described container 1 for cooking food.

The process initially provides for a step of assembly of the first element 4 and of the second element 5. In this step, both the elements have substantially discoid form, with parameters such as thickness and diameter defined based on the specifications already described above. As illustrated from figure 2, the two discoid elements, both in rough form obtained by means of processes of sandblasting or satinizing, are center-aligned by means of a weld point 9, generally by means of electric arc or electric heating element, so as to obtain a concentricity constraint of the two discs and allow having a suitable centering for the following steps of the process.

The subsequent step consists of a step of heating the materials, in which the two discoid elements, joined by means of the weld point 9, are heated at a temperature in an interval comprised between 350°C and 450°C, by using heating means that are known in the field, which are not further described herein. Generally, the temperature used is 400°C, nevertheless it is possible to use other temperatures belonging to the preceding interval, selected as a function of the process parameters of the subsequent step.

An overly low temperature, below 350°C, would not allow having a good plasticity of the materials and no welding between the two would be created. Instead, a temperature above 450°C would generate an oxidation of the surface of the stainless steel discoid element 5, thus rendering the joining of the two elements impossible.

In addition, it is necessary that the maintenance time at the temperature of 400°C must be limited for the same reason as the above-described over-temperature, since the oxidation can also be present at 400°C even if in a much slower manner.

Following the heating step, the assembly 11, composed by the joining of the first element 4 and of the second element 5, is mounted on a press.

More particularly, the assembly 11 is mounted in a suitably shaped die 10 of a screw press adapted to execute the step of pressing said assembly 11 by means of the known technique of impact bonding.

The die 10 has concavities 12, suitably designed such that the initial contact with the assembly 11 occurs first in the central point thereof and subsequently is extended in a radial sense towards the outside. More in detail, this technique provides for a beating of the elements 4 and 5 by means of said press, thus generating a violent impact and, by exploiting the sliding of the more deformable material, in the specific case the first element 4, on the harder second element, one is able to generate a perfect joining of the elements 4 and 5.

In order to have a continuous connection of the elements 4 and 5, the screw press must have a specific translation speed, generally comprised in an interval that ranges from 50 mm/s to 500 mm/s but which, for example, can be about 300 mm/s at the time of impact. In other embodiments of the present process, it is also possible to have translation speed of the screw press not comprised in the abovementioned interval.

In the same manner, in addition to a specific translation speed, in order to obtain a permanent assembly of the elements 4 and 5 it is necessary to have a specific impact force of the press, generally comprised between 1500 ton-force (about 15000 kN) and 3000 ton-force (about 30000 kN) but which, for example, can be about 2200 ton-force (about 22000 kN).

In other embodiments of the present process, it is also possible to have impact forces of the press that are not comprised in the abovementioned interval.

Subsequently, the assembly 11 - exiting from the step of pressing carried out by means of the impact bonding, which thus appears as a single piece - is positioned in a suitable mold 13 so that the step of forming or molding of the container is executed. The mold 13 is suitable designed so that at the end of said forming step, the container 1 created by means of the molding of the assembly 11 - through a suitable forming or molding means 14 such as, for example, a hydraulic press, has both the first element 4 and the second element 5 not only on the bottom 2, but also along the initial part P of the side wall 3: for this reason, during said forming or molding step, provision is made for a further step of folding said assembly 11 on the bottom 2 and along a portion of the initial part P of the side wall 3 corresponding to the section 8.

It is important that the container 1, at the end of its production process, does not have sharp edges and the like. For this reason, in one embodiment thereof, the process comprises, in addition to the steps described above, or even only in addition to some of these steps, at least one step of mechanical finish processing.

In another embodiment, the process comprises, in addition to the steps described above, or even only in addition to some of these steps, at least one chemical or physical surface treatment step, such as pickling, sandblasting, and the like.

In still another embodiment, the process comprises, in addition to the steps described above, or even only in addition to some of these steps, at least one step of assembly of other components, e.g. grips, handles and the like.

In another embodiment the process comprises, in addition to the steps described above, or even only in addition to some of these steps, at least one product painting step.

It was thus seen that the invention fully attains the proposed objects.

The container according to the present invention, due to the additional presence of the second element made of stainless steel also on the initial part of the side wall, allows greater thermal efficiency in the case of use of said container on electromagnetic induction plates since in this manner the steel intercepts multiple field lines and absorbs, consequently, more power than that which would be absorbed by a "flat" disc container, i.e. with the second steel material only present on the bottom. Consequently, due to the greater absorption of power, also the efficiency relative to the heating speed of the container improves. The presence of the second steel material on the initial part of the side wall also allows considerably mitigating the problem of deformation of the bottom, explained above in the state of the art, since the zone with greater concentration of the tensile stresses of the bottom, identifiable in the initial part of the lateral annular wall, is protected by the second stainless steel element, which thus considerably limits the deformations.

Modifications and variations of the invention are possible within the protective scope defined by the claims.

## Claims

1. Container (1) for cooking food comprising a bottom (2) and a side wall (3), said side wall (3) having an initial part (P) comprising an end (8a) belonging to said bottom (2) and wherein between said initial part (P) and said bottom (2) there is a section (8) with a determined radius (R) of curvature and a certain extension arc, said container (1) further comprises a first element (4) having an area (6) and made of a good heat conducting first metal material, and a second element (5), made of a second ferromagnetic metal material, said second element (5) being fixed to said first element (4) externally with respect to the area (6) of said first element (4) which corresponds to the bottom (2) of the container (1), by means of pressing with the impact bonding technique, so as to firmly connect said second element (5) with said first element (4), said container (1) being subsequently realised by forming or moulding in a specially shaped mould (13) **characterized in that** said second element (5) extends contiguously over the whole bottom (2) and along a portion of the initial part (P) corresponding to the section (8), said section (8) being between 10 mm and 30 mm long and extending for an extension arc between 30° and 80° with respect to the lying plane of the bottom (2).

2. Container according to claim 1, wherein the section (8) extends for a length of 10 mm of the initial part (P) of said side wall (3) of the container (1).

3. Container according to claim 1 or 2, wherein said radius (R) of curvature has a radius of about 20 mm.

4. Container according to one of the preceding claims, wherein said section (8) extends over an arc of about 35°.

5. Container according to one of the preceding claims, wherein the second element (5), in its rough form, has a thickness comprised between about 0,2 mm and 1 mm.

6. Container according to one of the preceding claims, wherein the side wall (3) is a curved wall with an annular shape.

7. Container according to one of the preceding claims, wherein said first metal material is of the non-ferromagnetic type.

8. Container according to one of the preceding claims, wherein said first metal material comprises aluminium or aluminium alloy.

9. Container according to one of the preceding claims, wherein the first element (4), in its rough form, has a thickness and a diameter comprised between about 1 mm and 7 mm and between 90 mm and 460 mm, respectively.

10. Process for the realisation of a container for cooking food, comprising the steps of:
welding the first element (4), made of a first metal material, and the second element (5), made of a second metal material, both in rough form obtained by sandblasting or satin finishing processes, in their centre by means of a welding point (9);
heating the two elements (4) and (5) welded to a predetermined temperature; mounting the assembly (11), obtained by means of the previous heating step, in a press;
pressing said assembly (11) with the impact bonding technique so as to firmly connect said second element (5) with said first element (4);
positioning the assembly (11), obtained after the pressing step, in a suitably shaped mould (13);
forming, by means of forming or moulding means (14), the assembly (11) previously positioned in the mould (13)
**characterized in that**
the forming step comprises a folding step of said assembly (11) on the bottom (2) and along a portion of the initial part (P) of the side wall (3) corresponding to the section (8), said section (8) being between 10 mm and 30 mm long and extending for an extension arc between 30° and 80° with respect to the lying plane of the bottom (2).

11. Process according to claim 10, wherein said first metal material is of the non-ferromagnetic type.

12. Process according to claim 10 or 11, wherein said second metal material is of the ferromagnetic type.

13. Process according to one of the claims 10 to 12, wherein said first metal material comprises aluminium or aluminium alloy.

14. Process according to one of the claims 10 to 13, wherein said second metal material comprises a ferromagnetic stainless steel.

15. Process according to one of the claims 10 to 14, wherein the step of heating the two pre-welded elements (4) and (5) is carried out at a temperature comprised between about 350°C and 450°C.

16. Process according to one of claims 10 to 15, wherein the pressing step of said assembly (11) is carried out with an impact force of the press comprised between about 1500 tons-force and 3000 tons-force.

17. Process according to one of claims 10 to 16, wherein the step of pressing said assembly (11) is carried out with a translation speed of the press comprised between about 50 mm/s and 500 mm/s.

## Patentansprüche

1. Behälter (1) zum Kochen von Lebensmitteln, umfassend einen Boden (2) und eine Seitenwand (3), wobei die besagte Seitenwand (3) einen Anfangsteil (P) aufweist, der ein Ende (8a), das zu dem besagten Boden (2) gehört, umfasst und worin es zwischen dem besagten Anfangsteil (P) und dem besagten Boden (2) einen Abschnitt (8) mit einem bestimmten Krümmungsradius (R) und einem bestimmten Ausdehnungsbogen gibt, wobei der besagte Behälter (1) ferner ein erstes Element (4), das eine Fläche (6) aufweist und aus einem gut wärmeleitenden ersten Metallmaterial hergestellt ist, und ein zweites Element (5), das aus einem zweiten ferromagnetischen Metallmaterial hergestellt ist, umfasst, wobei das besagte zweite Element (5) an dem besagten ersten Element (4) außen in Bezug auf die Fläche (6) des besagten ersten Elements (4), die dem Boden (2) des Behälters (1) entspricht, mittels Pressen mit der Impact Bonding-Technik befestigt ist, um das besagte zweite Element (5) fest mit dem besagten ersten Element (4) zu verbinden, wobei der besagte Behälter (1) anschließend durch Umformen oder Formen in einer speziell ausgebildeten Form (13) hergestellt wird, **dadurch gekennzeichnet, dass** sich das besagte zweite Element (5) zusammenhängend über den gesamten Boden (2) und entlang eines Abschnitts des Anfangsteils (P) entsprechend dem Abschnitt (8) erstreckt, wobei der besagte Abschnitt (8) zwischen 10 mm und 30 mm lang ist und sich um einen Ausdehnungsbogen zwischen 30° und 80° in Bezug auf die Liegeebene des Bodens (2) erstreckt.

2. Behälter nach Anspruch 1, worin sich der Abschnitt (8) über eine Länge von 10 mm des Anfangsteils (P) der besagten Seitenwand (3) des Behälters (1) erstreckt.

3. Behälter nach Anspruch 1 oder 2, worin der besagte Krümmungsradius (R) einen Radius von etwa 20 mm aufweist.

4. Behälter nach einem der vorangegangenen Ansprüche, worin sich der besagte Abschnitt (8) über einen Bogen von etwa 35° erstreckt.

5. Behälter nach einem der vorangegangenen Ansprüche, worin das besagte zweite Element (5) in seiner rohen Form eine Dicke zwischen etwa 0,2 mm und 1 mm aufweist.

6. Behälter nach einem der vorangegangenen Ansprüche, worin die besagte Seitenwand (3) eine gekrümmte Wand mit einer ringförmigen Form ist.

7. Behälter nach einem der vorangegangenen Ansprüche, worin das besagte erste Metallmaterial dem nicht-ferromagnetischen Typ entspricht.

8. Behälter nach einem der vorangegangenen Ansprüche, worin das besagte erste Metallmaterial Aluminium oder eine Aluminiumlegierung umfasst.

9. Behälter nach einem der vorangegangenen Ansprüche, worin das besagte erste Element (4) in seiner rohen Form eine Dicke und einen Durchmesser jeweils zwischen etwa 1 mm und 7 mm und zwischen 90 mm und 460 mm aufweist.

10. Verfahren zur Herstellung eines Behälters zum Kochen von Lebensmitteln, umfassend die Schritte des:
Schweißens des ersten Elements (4) aus einem ersten Metallmaterial und des zweiten Elements (5) aus einem zweiten Metallmaterial, beide durch Sandstrahl- oder
Satinierverfahren in roher Form erhalten, in ihrer Mitte mittels eines Schweißpunktes (9);
Erhitzens der beiden geschweißten Elemente (4) und (5) auf eine vorbestimmte Temperatur; Montierens der mittels des vorherigen Erhitzungsschritts erhaltenen Baugruppe (11) in eine Presse;
Pressens der besagten Baugruppe (11) mit der Impact Bonding-Technik, um das besagte zweite Element (5) mit dem besagten ersten Element (4) fest zu verbinden;
Positionierens der nach dem Pressschritt erhaltenen Baugruppe (11) in einer geeignet ausgebildeten Form (13) ;
Umformens mittels Umform- oder Formmittel (14) der Baugruppe (11), die zuvor in der Form (13) positioniert wurde
**dadurch gekennzeichnet, dass**
der Umformschritt einen Faltschritt der besagten Baugruppe (11) auf dem Boden (2) und entlang eines Abschnitts des Anfangsteils (P) der Seitenwand (3) entsprechend dem Abschnitt (8) umfasst, wobei der besagte Abschnitt (8) zwischen 10 mm und 30 mm lang ist und sich um einen Ausdehnungsbogen zwischen 30° und 80° in Bezug auf die Liegeebene des Bodens (2) erstreckt.

11. Verfahren nach Anspruch 10, worin das besagte erste Metallmaterial dem nicht-ferromagnetischen Typ entspricht.

12. Verfahren nach Anspruch 10 oder 11, worin das besagte zweite Metallmaterial dem ferromagnetischen Typ entspricht.

13. Verfahren nach einem der Ansprüche 10 bis 12, worin das besagte erste Metallmaterial Aluminium oder eine Aluminiumlegierung umfasst.

14. Verfahren nach einem der Ansprüche 10 bis 13, worin das besagte zweite Metallmaterial ferromagnetischen rostfreien Stahl umfasst.

15. Verfahren nach einem der Ansprüche 10 bis 14, worin der Schritt des Erhitzens der zwei vorgeschweißten Elemente (4) und (5) bei einer Temperatur zwischen etwa 350 °C und 450°C ausgeführt wird.

16. Verfahren nach einem der Ansprüche 10 bis 15, worin der besagte Pressschritt der besagten Baugruppe (11) mit einer Schlagkraft der Presse zwischen etwa 1500 Tonnen-Kraft und 3000 Tonnen-Kraft ausgeführt wird.

17. Verfahren nach einem der Ansprüche 10 bis 16, worin der besagte Schritt des Pressens der besagten Baugruppe (11) mit einer Verschiebegeschwindigkeit der Presse zwischen etwa 50 mm/s und 500 mm/s ausgeführt wird.

## Revendications

1. Récipient (1) pour cuire des aliments comprenant un fond (2) et une paroi latérale (3), ladite paroi latérale (3) comportant une partie initiale (P) comprenant une extrémité (8a) appartenant audit fond (2) et dans lequel entre ladite partie initiale (P) et ledit fond (2) se trouve une section (8) d'un rayon (R) de courbure déterminé et un certain arc d'extension, ledit récipient (1) comprenant en outre un premier élément (4) ayant une surface (6) et constitué d'une première matière métallique bonne conductrice de chaleur, et un deuxième élément (5), constitué d'une deuxième matière métallique ferromagnétique, ledit deuxième élément (5) étant fixé audit premier élément (4) extérieurement par rapport à la surface (6) dudit premier élément (4) qui correspond au fond (2) du récipient (1), moyennant pressage par la technique de collage par impact, de façon à raccorder fermement ledit deuxième élément (5) audit premier élément (4), ledit récipient (1) étant ensuite réalisé par formage ou moulage dans un moule (13) spécialement formé, **caractérisé en ce que** ledit deuxième élément (5) s'étend de manière contigüe sur la totalité du fond (2) et le long d'une portion de la partie initiale (P) correspondant à la section (8), la longueur de ladite section (8) étant entre 10 mm et 30 mm et s'étendant sur un arc d'extension entre 30° et 80° par rapport au plan étendu du fond (2).

2. Récipient selon la revendication 1, dans lequel la section (8) s'étend sur une longueur de 10 mm de la partie initiale (P) de ladite paroi latérale (3) du récipient (1).

3. Récipient selon la revendication 1 ou 2, dans lequel ledit rayon (R) de courbure a un rayon d'environ 20 mm.

4. Récipient selon l'une des revendications précédentes, dans lequel ladite section (8) s'étend sur an arc d'environ 35°.

5. Récipient selon l'une des revendications précédentes, dans lequel le deuxième élément (5), dans sa forme brute, a une épaisseur comprise entre environ 0,2 mm et 1 mm.

6. Récipient selon l'une des revendications précédentes, dans lequel la paroi latérale (3) est une paroi incurvée d'une forme annulaire.

7. Récipient selon l'une des revendications précédentes, dans lequel ladite première matière métallique est du type non-ferromagnétique.

8. Récipient selon l'une des revendications précédentes, dans lequel ladite première matière métallique comprend de l'aluminium ou de l'alliage d'aluminium.

9. Récipient selon l'une des revendications précédentes, dans lequel le premier élément (4), dans sa forme brute, a une épaisseur et un diamètre compris entre environ 1 mm et 7 mm et entre 90 mm et 460 mm, respectivement.

10. Procédé pour la réalisation d'un récipient pour cuire des aliments, comprenant les étapes de :
soudage du premier élément (4), constitué d'une première matière métallique, et du deuxième élément (5), constitué d'une deuxième matière métallique, toutes les deux sous forme brute obtenues par des procédés de finition par sablage ou satinage, dans leur centre au moyen d'un point de soudure (9) ;
chauffage des deux éléments (4) et (5) soudés à une température prédéterminée ; montage de l'ensemble (11), obtenu au moyen de l'étape de chauffage précédente, dans une presse ;
pressage dudit ensemble (11) par la technique de collage par impact de façon à raccorder fermement ledit deuxième élément (5) audit premier élément (4) ;
positionnement de l'ensemble (11) obtenu après l'étape de pressage, dans un moule de forme adaptée (13) ;
formage, grâce à des moyens de formage ou de moulage (14), de l'ensemble (11) précédemment positionné dans le moule (13)
**caractérisé en ce que**
l'étape de formage comprend une étape de pliage dudit ensemble (11) sur le fond (2) et le long d'une portion de la partie initiale (P) de la paroi latérale (3) correspondant à la section (8), la longueur de ladite section (8) étant entre 10 mm et 30 mm et s'étendant sur un arc d'extension entre 30° et 80° par rapport au plan étendu du fond (2).

11. Procédé selon la revendication 10, dans lequel ladite première matière métallique est de type non ferromagnétique.

12. Procédé selon la revendication 10 ou 11, dans lequel ladite deuxième matière métallique est de type ferromagnétique.

13. Procédé selon l'une des revendications 10 à 12, dans lequel ladite première matière métallique comprend de l'aluminium ou de l'alliage d'aluminium.

14. Procédé selon l'une des revendications 10 à 13, dans lequel ladite deuxième matière métallique comprend un acier inoxydable ferromagnétique.

15. Procédé selon l'une des revendications 10 à 14, dans lequel l'étape de chauffage des deux éléments (4) et (5) présoudés est réalisée à une température comprise entre environ 350°C et 450°C.

16. Procédé selon l'une des revendications 10 à 15, dans lequel l'étape de pressage dudit ensemble (11) est réalisée avec une force d'impact de la presse comprise entre environ 1 500 tonnes-force et 3 000 tonnes-force.

17. Procédé selon l'une des revendications 10 à 16, dans lequel l'étape de pressage dudit ensemble (11) est réalisée avec une vitesse de translation de la presse comprise entre environ 50 mm/s et 500 mm/s.
